# FASCICULE DE BREVET EUROPEEN

(11) **EP 3 882 290 B1**
(45) Date de publication et mention de la délivrance du brevet: **07.01.2026**
(21) Numéro de dépôt: 21162488.7
(22) Date de dépôt: 15.03.2021
(51) Int. Cl.: C08G 18/16, C08G 18/18, C08G 18/22, C08G 18/75, C06B 45/10

(54) **COMPOSITION CATALYTIQUE POUR UNE RETICULATION A TEMPERATURE AMBIANTE DE LIANTS POLYURETHANES**
KATALYTISCHE ZUSAMMENSETZUNG FÜR EINE VERNETZUNG VON POLYURETANBINDEMITTELN BEI ZIMMERTEMPERATUR
CATALYTIC COMPOSITION FOR AMBIENT TEMPERATURE CROSS-LINKING OF POLYURETHANE BINDERS

(30) Priorité: 20.03.2020 FR 2002760
(43) Date de publication de la demande: 22.09.2021
(73) Titulaire: ROXEL France, 33160 Saint Médard en Jalles (FR)
(72) Inventeur: ACHERIBOTEHERE, Hervé, 33160 SAINT-MEDARD-EN-JALLES Cedex (FR); REJSEK-RIBA, Virginie, 33160 SAINT-MEDARD-EN-JALLES Cedex (FR); TOZZO, Grégory, 33160 SAINT-MEDARD-EN-JALLES Cedex (FR)
(74) Mandataire: Santarelli

(56) Documents cités:
- EP-A1- 2 455 412
- WO-A1-2005/058996
- WO-A1-2018/122495
- CN-A- 110 305 289
- US-A- 5 962 142
- US-A1- 2018 086 956

## Description

La présente invention se situe dans le domaine de la réticulation de liants polyuréthanes. Elle peut s'appliquer au domaine des chargements propulsifs pour armes tactiques (missile, roquette), plus particulièrement des propergols composites solides sur base de liant polyuréthane, obtenus par un procédé de fabrication par malaxage, coulée, cuisson. L'invention concerne une composition catalytique pour une réticulation à température ambiante de liants polyuréthanes, notamment utilisés au sein de chargements propulsifs.

Les polyuréthanes sont des polymères qui contiennent le groupement uréthane. La fonction uréthane est plus rarement appelée fonction carbamate :

R'-NH-CO-O-R.

Cette fonction résulte de la réaction de condensation entre un composé à hydrogène mobile de type alcool R-OH et un isocyanate R'-N=C=O. Pour former un polyuréthane, il faut faire réagir des polyols (au moins deux fonctions alcools par molécule) avec des polyisocyanates (au moins deux fonctions isocyanates par molécule).

La réaction d'un diol avec un diisocyanate conduit à un polyuréthane linéaire.

HO-R-OH + O=C=N-R'-N=C=O → -[-O-R-O-CO-NH-R'-NH-CO-]-

La fonction uréthane, obtenue par l'addition d'un isocyanate sur un alcool, est connue depuis la fin du XlXième siècle et les réactions des isocyanates sur divers composants présentant un hydrogène mobile ont été étudiées au début du XXième siècle. Ces réactions sont généralement exothermiques.

Les catalyseurs de la réaction isocyanate - hydroxyle appartiennent à deux familles principales : complexes organométalliques (catalyse de type acide de lewis) ou composés organiques nucléophiles (catalyse de type basique). Parmi celles-ci il est commun d'utiliser des sels organométalliques (le dibutyldilaurate d'étain ou DBTDL, par exemple) pour la réaction isocyanate - hydroxyle, ou des mélanges des sels organométalliques en mélange avec des polyamines tertiaires aromatiques (le 1,4-diazabicyclo [2.2.2] octane, en abrégé DABCO, est l'exemple le plus significatif de ces amines) lorsqu'il s'agit de moduler la compétition entre les réactions isocyanate - hydroxyle et isocyanate - eau dans le cas des mousses polyuréthanes. A contrario, les acides et les chlorures d'acides sont des inhibiteurs de la réaction isocyanate - hydroxyle.

L'ajout de tout additif ou charge pouvant modifier significativement le caractère acido-basique d'une formulation de polyuréthane est de nature à modifier la cinétique de celle-ci.

L'état de l'art du domaine décrit le recours à l'emploi de systèmes catalytiques pour accélérer la cinétique de la réaction de réticulation des polyuréthanes (c'est-à-dire la réaction entre un isocyanate et un polyol). Le catalyseur le plus couramment décrit dans le domaine est le dibutyldilaurate d'étain (DBTDL). C'est un sel organométallique à base d'étain. On parle de catalyse de type sel organométallique. Il existe de nombreux autres catalyseurs de type sel organométallique connus dans le domaine, les plus courants sont à base d'étain, de fer, de plomb, de cuivre et plus récemment à de bismuth ou de zinc.

Dans l'art antérieur, il est également couramment décrit le recours à un catalyseur organique de type amine tertiaire (catalyse de type basique).

La nature de l'isocyanate (selon qu'il soit de type aliphatique ou aromatique) permet également de moduler la cinétique de réaction. Les documents US2018/086956A1, CN110305289A, EP2455412A1, US596214 A, WO2005/058996A1, WO2018/122495A1 décrivent des compositions de l'art antérieur.

Dans le domaine spécifique des propergols composites, l'état de l'art décrit l'emploi de catalyseurs de réticulation pour réduire la durée de cuisson des propergols composites à liant polyuréthane. L'ouvrage « Technologie des propergols solides - Davenas » décrit que l'utilisation de catalyseurs de réticulation est rendue nécessaire pour réduire le temps de cuisson du propergol. Outre l'aspect cinétique, ils peuvent jouer un rôle considérable sur les propriétés mécaniques en favorisant certaines réactions et donc orientant la formation du réseau de polymère. Les catalyseurs de réticulation sont généralement des sels organiques de métaux de transition (étain, fer, chrome).

La cinétique de la réaction de réticulation doit être suffisamment lente pour permettre les opérations de mise en œuvre (ce temps de latence de plusieurs heures est appelé « vie de pot », en anglais « pot-life ») mais suffisamment rapide pour ne pas exiger des temps de réticulation (temps de cuisson) trop longs.

Les températures de cuisson vont généralement de 40 à 65 °C et les temps de cuisson nécessaires à la stabilisation des propriétés mécaniques s'étalent généralement de 7 à 20 jours environ.

La cuisson a pour but d'accélérer les réactions de réticulation, donc de durcir rapidement le propergol. Elle s'obtient en portant le propergol en température dans une étuve (ou un puits de coulée pour les gros blocs) et en l'y laissant séjourner un certain temps. Ce temps est d'autant plus court que la température de cuisson est plus élevée.

Dans le domaine des propergols composites sur base de liant polyuréthane, il est communément décrit le recours à 2 types de compositions catalytiques :
a. DBTDL (dibutyldilaurate d'étain), seul ou souvent associé à une amine tertiaire (typiquement le tris(diméthylaminométhyl)phénol ou DMP30) ;
b. Tri-phényl Bismuth (TPB).

Les températures de cuisson appliquées sont généralement de l'ordre de 40 à 65°C.

Les compositions catalytiques usuellement employées dans le domaine des propergols composites (couple DBTDL/amine DMP30 ou TPB) ne permettent pas d'accéder à une réticulation suffisamment rapide pour être compatible d'une cuisson à température ambiante et sur une durée suffisamment courte (par courte on entend des durées compatibles des contraintes de logistique industrielle et cadences de production), y compris en procédant à une augmentation de la teneur en catalyseur dans la formulation de propergol.

Une solution envisageable serait d'augmenter la teneur en catalyseur des compositions catalytiques conventionnelles (DBTDL + amine tertiaire). Toutefois cette approche n'est pas satisfaisante du fait que cela nécessiterait une augmentation très notable des teneurs en catalyseurs, avec à la clé des impacts préjudiciables attendus : un accroissement notable du taux d'amine tertiaire risque d'engendrer d'une part un impact préjudiciable sur les propriétés mécaniques du matériau propergol (il est en effet connu dans le domaine que le DMP-30 influe favorablement sur les propriétés mécaniques du propergol lorsque introduit en quantité faible, mais de façon défavorable lorsqu'introduit en teneur élevée), d'autre part d'exacerber le risque de dégagement gazeux au contact du perchlorate d'ammonium (les deux espèces chimiques étant connues comme chimiquement incompatibles en mélange intime) ; un accroissement conséquent du taux de DBTDL aura quant à lui un impact préjudiciable vis-à-vis du critère toxicité (le DBTDL est un constituant chimique CMR, classé selon la réglementation CLP en vigueur « Toxique pour la reproduction » catégorie 1B et « Mutagène » Catégorie 2).

Une autre solution serait de recourir à une catalyse unique type amidine (DBU, 1,8-diazabicyclo[5.4.0]undéc-7-ène, ou DBN, 1,5-Diazabicyclo[4.3.0]non-5-ène), laquelle est décrite dans la littérature technique comme ayant un pouvoir catalytique supérieur à celui des simples amines tertiaires (tel le DMP-30). Toutefois, cette approche n'est pas satisfaisante, d'une part du fait d'une incompatibilité chimique très forte entre ce type de constituant amidine (en raison de leur très forte basicité) et le constituant Perchlorate d'Ammonium (ingrédient principal des propergols composite considérés dans le cadre de la présente invention) ce qui proscrit leur emploi dans le cadre du domaine concerné par la présente invention, d'autre part parce qu'il est préférable de demeurer sur un système mixte basé sur l'association d'un catalyseur organométallique couplé à un catalyseur basique afin de bénéficier d'un effet synergique permettant de limiter la teneur en composé amine (pour des raisons de compatibilité chimique évoquées ci-après) mais également afin de disposer de la possibilité de moduler la réactivité du système catalytique, donc la cinétique de formation du polyuréthanne et par conséquent ajuster la durée de cuisson (en lien avec la flexibilité industrielle souhaitée) - via l'ajustement du taux d'un seul des 2 constituants du système catalytique sans devoir recourir à une augmentation notable de la teneur globale du système catalytique au sein du propergol.

L'invention vise à pallier tout ou partie des problèmes cités plus haut en proposant une composition catalytique permettant une réticulation à température ambiante de liants polyuréthanes, notamment utilisés au sein de chargements propulsifs, sur une durée courte.

A cet effet, l'invention a pour objet une composition catalytique pour une réticulation à température ambiante de liants polyuréthanes, caractérisée en ce qu'elle comprend :
a. Un catalyseur de type sel organique de bismuth ;
b. Un catalyseur basique de type amine tertiaire ;
c. Un isocyanate aliphatique di-fonctionnel non bloqué.

Le catalyseur de type sel organique de bismuth est du néodécanoate de bismuth.

Le catalyseur basique de type amine tertiaire est du tris(diméthylaminométhyl)phénol (DMP30).

L'isocyanate aliphatique di-fonctionnel non bloqué est le di-isocyanate d'isophorone (IPDI).

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 représente le taux de conversion de l'isocyanate en uréthane en fonction du temps à une température de 55°C et à température ambiante pour le système catalytique référence du domaine DBTDL / DMP-30 associé à un isocyanate MDCI (diisocyanate de 4,4'-methylenedicyclohexyle) ;
[Fig.2] la figure 2 représente le taux de conversion de l'isocyanate en uréthane en fonction du temps à température ambiante avec l'emploi d'un seul catalyseur basique (amine ou amidine) de l'art antérieur et associé au même isocyanate MDCI;
[Fig.3] la figure 3 représente le taux de conversion de l'isocyanate en uréthane en fonction du temps à température ambiante avec l'emploi d'un catalyseur organométallique de l'art antérieur associé à un catalyseur amine de l'art antérieur et au même isocyanate MDCI;
[Fig.4] la figure 4 représente la cinétique de conversion de l'isocyanate en uréthane (au travers du suivi de la valeur de viscosité) en fonction du temps à une température de 55°C (référence) et à température ambiante avec l'emploi d'un seul catalyseur de l'art antérieur ;
[Fig.5] la figure 5 représente la cinétique de conversion de l'isocyanate en uréthane (au travers du suivi de la valeur de viscosité) en fonction du temps à une température de 55°C (référence) et à température ambiante avec l'emploi d'une composition catalytique selon l'invention.

L'invention est décrite dans le domaine de la réticulation à température ambiante de liants polyuréthanes, notamment utilisés au sein de chargements propulsifs de type propergol composite. Toutefois, les compositions catalytiques décrites dans l'invention peuvent également trouver une utilisation profitable dans les formulations de matériaux inertes d'aménagement interne associés au chargement de propergol, tels que les lieurs sur base polyuréthane.

L'objet de l'invention réside dans le fait d'utiliser un ensemble dit de catalyse mixte, basé sur l'association d'un catalyseur de type sel organique de Bismuth non CMR (en remplacement des sels d'étain du fait de leur toxicité élevée CMR ; le terme CMR étant issu de la réglementation sur la prévention des risques chimiques et étant également utilisé pour désigner certains procédés industriels qui ont des effets cancérogènes, mutagènes ou toxiques pour la reproduction chez les professionnels qui ont été exposés) et d'un catalyseur basique de type amine tertiaire. En effet, cela permet d'une part de bénéficier de l'effet de synergie induit par l'association des deux catalyseurs, d'autre part de pouvoir plus aisément moduler la cinétique de réticulation en modulant au choix la teneur d'un seul catalyseur ou des deux catalyseurs. Enfin, cela permet avantageusement de pouvoir limiter la quantité totale en catalyseur amine au sein du propergol dans le souci de réduire l'impact sur les propriétés fonctionnelles de celui-ci, notamment les performances énergétiques du propergol. En effet, les catalyseurs de type organo-métalliques présentent l'avantage d'être introduits en quantité très faible, moindre que celle des catalyseurs basique de type amine. Par ailleurs, du fait de leur basicité très élevée, les catalyseurs de type amine sont susceptibles d'interagir chimiquement avec le perchlorate d'ammonium qui constitue la charge énergétique principale des propergols composites. Pour cette raison, il apparaît pertinent d'employer une teneur minimale en catalyseur basique et de s'appuyer sur l'adjonction d'un second catalyseur type sel de bismuth (dont il n'est pas identifié de risque d'incompatibilité chimique avec le perchlorate d'ammonium) pour atteindre la cinétique de réticulation souhaitée.

Par ailleurs, il est connu dans le domaine que la teneur en catalyseur amine peut impacter de façon défavorable les propriétés mécaniques finales du propergol lorsqu'introduit en teneur élevée. Pour cela, il apparaît judicieux de pouvoir garder la quantité introduite en amine tertiaire réduite au juste nécessaire, et de moduler uniquement la teneur en catalyseur sel de Bismuth pour ajuster la cinétique de réticulation.

Contre-exemple n°1 : impact de la température sur la cinétique de réaction pour la composition catalytique de référence (DBTDL / DMP-30) associé à un réticulant isocyanate référence MDCI (le MDCI, également dénommé H₁₂MDI, est un réticulant isocyanate di-fonctionnel très couramment utilisé dans le domaine des propergols composite).

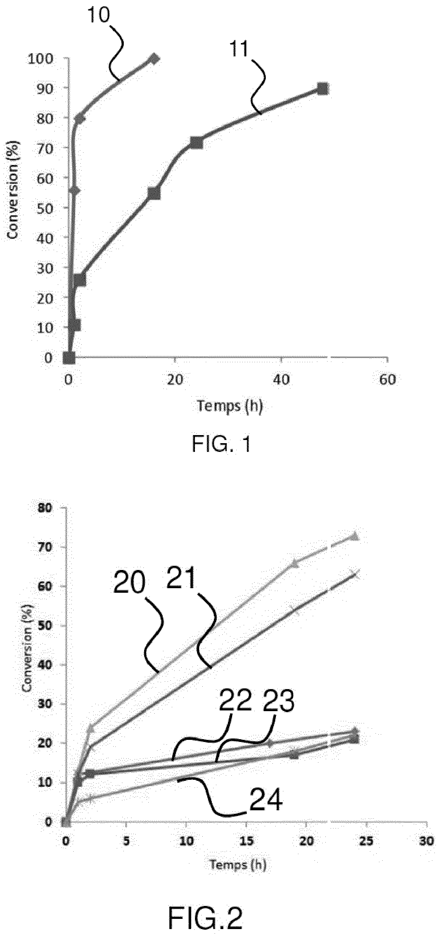

La figure 1 représente le taux de conversion de l'isocyanate en uréthane en fonction du temps à une température de 55°C (courbe 10) et à température ambiante (courbe 11). La courbe 10 mesurée à 55°C (taux de conversion de 100% obtenu après 20h) est considérée comme la cinétique de référence à atteindre à température ambiante grâce à des compositions catalytiques optimisées.

La figure 1 montre ainsi que l'abaissement de la température de 55°C (température référence représentative de la température de cuisson des propergols composite, courbe 10) à température ambiante (30°C, courbe 11) induit un fort abaissement de la cinétique de réaction avec une composition catalytique référence de l'art antérieur (réticulant isocyanate MDCI, catalyseur n°1 DBTDL, catalyseur n°2 amine tertiaire DMP30).

L'avancement de la réaction est ici représenté par l'évolution du taux de conversion de l'isocyanate en uréthane en fonction du temps, mesuré par spectrométrie infrarouge à l'aide d'un équipement muni d'un dispositif ATR (abréviation de « Attenuated Total Reflectance » pour Réflexion Totale Atténuée) sur des mélanges modèles (MDCl/DBTDL/DMP30). Le suivi cinétique est obtenu par la mesure quantifiée pour différentes durées de l'intensité de la bande caractéristique des fonctions isocyanates à environ 2260 cm-1 et celle de la bande caractéristique des fonctions uréthanes à environ 1700 cm-1.

La figure 1 montre que la composition catalytique MDCI / DBTDL / DMP30 de l'art antérieur n'est pas adaptée pour l'objectif d'une réticulation à température ambiante sur des durées identiques à celles employées dans les conditions de référence à 55°C. Le MDCI est un isocyanate aliphatique di-fonctionnel non bloqué.

Contre-exemple 2 : impact du/des catalyseurs(s) sur la cinétique de réaction à température ambiante.

La figure 2 représente le taux de conversion de l'isocyanate en uréthane en fonction du temps à température ambiante avec l'emploi d'un seul catalyseur basique de l'art antérieur (associé à un réticulant isocyanate MDCI).

La figure 2 montre qu'un taux de conversion de 100% après 20h ne peut être obtenu à température ambiante par l'emploi seul d'un catalyseur basique type amidine (DBU : courbe 20, DBN : courbe 21), guanidine (MTBD abrégé de 7-Methyl-1,5,7-triazabicyclo[4.4.0]dec-5-ene : courbe 24) ou amine (DMP30 : courbe 22, DABCO : courbe 23). Les composés DBU et DBN présentent les cinétiques de conversion les plus rapides. Pour le DBN, il n'est avantageusement pas observé d'effet de saturation ou d'inhibition comme décrit dans la littérature technique de l'art antérieur du domaine des polyuréthanes.

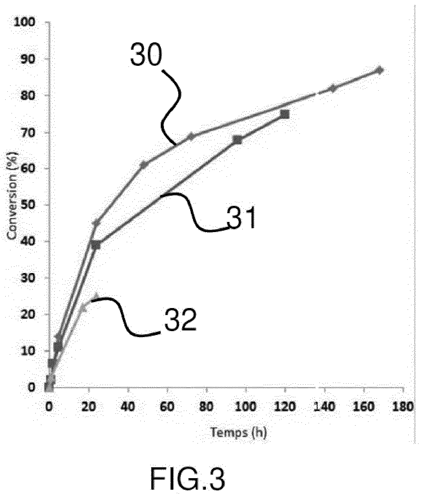

La figure 3 représente le taux de conversion de l'isocyanate en uréthane en fonction du temps à température ambiante avec l'emploi d'un système mixte constitué d'un catalyseur organométallique de l'art antérieur associé à un catalyseur amine de l'art antérieur (DABCO) et à un réticulant isocyanate MDCI.

La figure 3 montre qu'un taux de conversion de 100% après 20h ne peut également être obtenu à température ambiante par l'emploi seul d'un catalyseur organométallique type DBTDL (courbe 30), Triphényl Bismuth (TPB : courbe 31) ou à base de Molybdène (Bis(acetylacetonato) dioxomolybdene : courbe 32). Le TPB présente avantageusement une cinétique de conversion proche de celle de la référence DBTDL.

Exemple 1: cinétique de conversion de l'isocyanate en uréthane en fonction du temps à une température de 55°C (référence) et à température ambiante avec l'emploi d'un catalyseur de l'art antérieur et l'emploi de la composition catalytique selon l'invention.

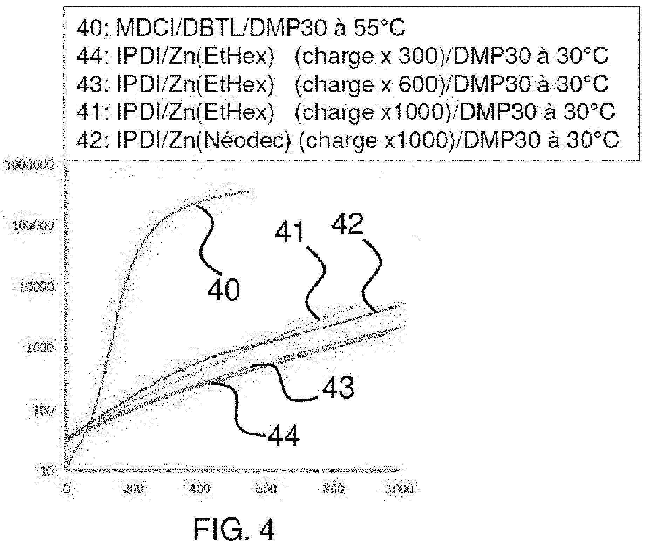

La figure 4 représente la cinétique de conversion de l'isocyanate en uréthane en fonction du temps à une température de 55°C (référence courbe 40 avec la composition MDCI, DBTL, DMP30) et à température ambiante avec l'emploi d'un catalyseur de l'art antérieur. La cinétique de conversion est ici représentée au travers du suivi de la valeur de viscosité dynamique (en Pa.s), les mesures ayant été menées sur des formulations de propergol inerte *i.e.* intégrant tous les constituants du propergol à l'exception de la charge énergétique (perchlorate d'ammonium) qui est remplacée par une charge inerte (Chlorure de Potassium) de densité et granulométrie proche. Les compositions catalytiques testées sont l'isocyanate IPDI (réticulant isophorone di-isocyanatede type aliphatique ) avec DMP-30 (catalyseur amine) et de l'éthylhexanoate de zinc (catalyseur organo métallique) à différents taux : x300 courbe 44, x600 courbe 43, x1000 courbe 41) et l'isocyanate IPDI (isophorone di-isocyanate) avec DMP-30 (catalyseur amine) et du néodécanoate de zinc (catalyseur organo métallique) à taux élevé (x1000 courbe 42). Le Néodécanoate de zinc présente l'avantage de ne pas être empreint d'une toxicité élevée (ce n'est pas une matière classée CMR), ce qui permet d'envisager son incorporation en teneur notablement accrue contrairement au DBTDL. L'ethylhexanoate de zinc présente quant à lui une toxicité élevée (classé « toxique pour la reproduction » catégorie 2) mais néanmoins moins contraignante que celle du DBTDL (Toxique pour la reproduction » catégorie 1B et « Mutagène » Catégorie 2).

Sur la figure 4, on peut voir que l'emploi d'un catalyseur de type néodécanoate de zinc (courbe 42), malgré le recours à un taux très élevé et à l'emploi d'un isocyanate IPDI, ne permet pas d'accéder à une cinétique suffisamment élevée. Ceci démontre que l'atteinte de la cinétique cible ne peut être assurément garantie par l'emploi de n'importe quel sel organométallique à base néodécanoate, mais bel et bien par le choix adapté du catalyseur, en teneur appropriée et d'une association à un isocyanate de réactivité élevée, supérieure à celle de la référence MDCI.

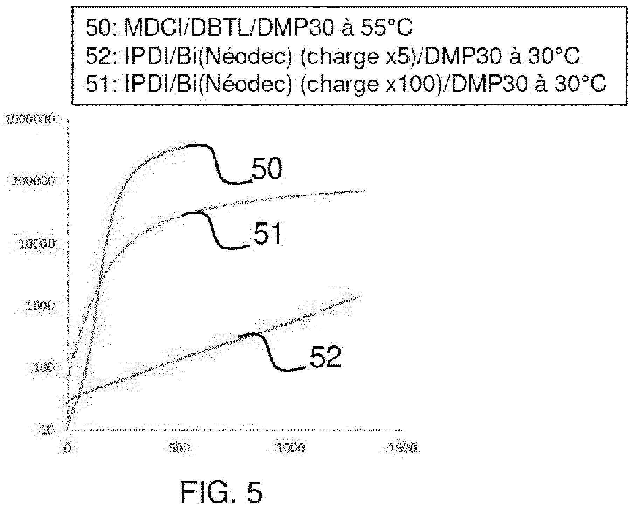

La figure 5 représente la cinétique de conversion de l'isocyanate en uréthane en fonction du temps à une température de 55°C (référence avec la composition MDCI, DBTL, DMP30) et à température ambiante avec l'emploi d'une composition catalytique selon l'invention. Ici encore, la cinétique de conversion est représentée au travers du suivi de la valeur de viscosité dynamique (en Pa.s), les mesures ayant été menées sur des formulations de propergol inerte. Les compositions catalytiques testées sont l'isocyanate IPDI (isocyanate d'isophorone) avec DMP-30 et avec du néodécanoate de bismuth à différents taux (courbe 52 : x5, courbe 51 : x100). Le Néodécanoate de bismuth présente l'avantage de ne pas être empreint d'une toxicité élevée (ce n'est pas une matière classée CMR contrairement au DBTDL), ce qui permet d'envisager son incorporation en teneur notablement accrue au sein du propergol. A titre d'illustration, le Néodécanoate de Bismuth employé dans les formulations des courbes 51 et 52 est un produit commercialisé par la société Borchers sous l'appellation BorchiKat 315.

La figure 5 illustre la possibilité d'atteindre un niveau de cinétique élevé à température ambiante (30°C), suffisamment proche de la cinétique référence à 55°C, grâce à l'emploi d'une composition catalytique mixte selon l'invention. Dans cet exemple, la composition catalytique selon l'invention est constituée de néodécanoate de bismuth (catalyseur organométallique) associé au DMP30 (catalyseur basique de type amine tertiaire), sous couvert du recours à un taux élevé de néodécanoate de bismuth (x100 par rapport à la teneur référence en catalyseur DBTDL, ce qui correspond à la courbe 51) et de l'utilisation d'un isocyanate IPDI présentant une activité catalytique favorablement plus élevée que l'isocyanate MDCI. Le taux de néodécanoate de bismuth pourrait si besoin être avantageusement augmenté au-delà du taux x100 (sans incidence sur la toxicité globale du système catalytique) afin de se rapprocher davantage de la cinétique référence.

La composition catalytique selon l'invention présente une forte réactivité qui permet de s'affranchir de l'emploi d'un sel organométallique à base d'étain (de toxicité élevée), d'un isocyanate aromatique (de réactivité élevée mais de toxicité plus élevée que les isocyanates de type aliphatique) ou d'un catalyseur basique de type amidine (de réactivité élevée mais chimiquement incompatible avec la charge énergétique perchlorate d'ammonium). La composition catalytique selon l'invention permet également de façon avantageuse de maintenir la teneur en catalyseur amine DMP-30 à un taux référence habituel, permettant ainsi de s'affranchir du risque d'impact préjudiciable sur les propriétés mécaniques du propergol ainsi que du risque d'exacerber le dégagement gazeux au contact de la charge énergétique perchlorate d'ammonium. En outre, la composition catalytique selon l'invention permet de reproduire une cinétique de réticulation à température ambiante (20-30°C) équivalente (ou pour le moins très proche) de celle obtenue à température plus élevée (50-60°C) avec des compositions catalytiques conventionnelles du domaine formulées sur l'association DBTDL/DMP30 ou TPB seul.

## Revendications

1. Composition catalytique pour une réticulation à température ambiante de liants polyuréthanes, **caractérisée en ce qu'**elle comprend :
a. Un catalyseur de type sel organique de bismuth, le catalyseur de type sel organique de bismuth étant du néodécanoate de bismuth ;
b. Un catalyseur basique de type amine tertiaire, le catalyseur basique de type amine tertiaire étant du tris(diméthylaminométhyl)phénol;
c. Un isocyanate aliphatique di-fonctionnel non bloqué, l'isocyanate aliphatique di-fonctionnel non bloqué étant du di-isocyanate d'isophorone.

## Patentansprüche

1. Katalytische Zusammensetzung für eine Vernetzung von Polyurethanbindemitteln bei Raumtemperatur, **dadurch gekennzeichnet, dass** sie Folgendes umfasst:
a. einen Katalysator vom Typ organisches Bismutsalz, wobei der Katalysator vom Typ organisches Bismutsalz Bismut-Neodecanoat ist;
b einen basischen Katalysator vom Typ tertiäres Amin, wobei der basische Katalysator vom Typ tertiäres Amin Tris(dimethylaminomethyl)phenol ist;
c. ein nicht blockiertes difunktionales aliphatisches Isocyanat, wobei das nicht blockierte difunktionale aliphatische Isocyanat Isophorondiisocyanat ist.

## Claims

1. Catalytic composition for crosslinking polyurethane binders at room temperature, **characterised in that** it comprises:
a. An organic bismuth-salt catalyst, the organic bismuth-salt catalyst being bismuth neodecanoate;
b. A tertiary amine basic catalyst, the tertiary amine basic catalyst being tris(dimethylaminomethyl)phenol;
c. A non-blocked difunctional aliphatic isocyanate, the non-blocked difunctional aliphatic isocyanate being isophorone diisocyanate.
